# EUROPEAN PATENT APPLICATION

(11) **EP 4 620 297 A1**
(43) Date of publication of application: **24.09.2025**
(21) Application number: 23891827.0
(22) Date of filing: 13.10.2023
(51) Int. Cl.: A01K 1/035, A01K 29/00, B01D 53/30, B01D 46/00, B01D 46/42

(54) **PET INCUBATOR**

(30) Priority: 18.11.2022 KR 20220155223
(71) Applicant: Autoelex Co., Ltd., Gimhae-si, Gyeongsangnam-do 50805 (KR)
(72) Inventor: BAE, Jong Yoon, Gimhae-si Gyeongsangnam-do 50902 (KR)
(74) Representative: Milli, Simone
(86) International application number: PCT/KR2023/015816
(87) International publication number: WO 2024/106759

(57) **Abstract**

The present invention relates to a pet incubator. One aspect of the present invention comprises: a housing in which a space is formed; a case, which is provided in the housing, separates the inside of the housing into a first space and a second space, and has air-circulating holes formed at one side thereof; and an air-circulating module, which guides, to the second space, the air generated in the first space, measures the concentration of oxygen in the air flowing into the second space so as to remove carbon dioxide and supply oxygen, and adjusts the temperature of the air guided therein so as to selectively move the air to the first space or the outside.

## Description

### TECHNICAL FIELD

The present invention relates to an pet incubator that provides a space for recovery while protecting an animal, and more specifically, to a new type of pet incubator that may minimize discomfort felt by the animal in the incubator, may allow maintenance to be easily performed, and may also provide an aesthetically pleasing appearance.

### BACKGROUND ART

In general, an incubator for pets is a device that provides a recovery space for temporarily protecting and treating an animal until recovery after surgery or treatment.

Related pet incubator is disclosed in Korean Patent No. 10-0343625, Korean Patent No. 10-0497737, Korean Patent Application Publication No. 10-2011-0091930, Korean Utility Model Registration No. 20-0300258, and Korean Utility Model Registration No. 20-0365892.

That is, the conventional pet incubator is configured to have a space isolated from the external environment, and the interior of this space is configured to be observable from the outside, and is also configured to allow temperature and humidity control and ventilation of the interior space to be smoothly performed, thereby providing various functions and being formed in various shapes.

However, in the pet incubator of the above-described prior art, electronic components for various types of control are installed in a distributed manner across different parts, and thus, when a malfunction such as operational failure occurs, maintenance was difficult because the entire device had to be disassembled, and when any one component malfunctioned, the entire pet incubator had to be sent to an after-sales service center or the like, which was inconvenient.

In addition, the pet incubator of the above-described prior art have a problem in that, when an animal inside excretes, the excrement cannot be cleaned until the user accurately recognizes it, thereby inevitably causing contamination such as the excrement being smeared again on the body of the animal.

In addition, the pet incubator of the above-described prior art merely provide a ventilation function for discharging indoor air to the outside, and do not provide a function for selectively performing circulation and ventilation of indoor air, resulting in inconvenience in maintaining the temperature inside the pet incubator at an appropriate level.

In addition, the pet incubator of the above-described prior art merely perform a ventilation function of discharging the air inside the internal space to the room or blowing the room air into the internal space when the temperature of the space where the incubator is installed is high, and in fact, cannot perform cooling at a lower temperature than the room temperature, thereby being unsuitable for the recovery of an animal in hot summer weather.

In addition, the pet incubator of the above-described prior art have a problem in that an inner chamber is formed of a metal material and each wall surface is simply integrated by welding to each other, thereby making the manufacturing work difficult.

In addition, the pet incubator of the above-described prior art have caused consumer dissatisfaction in that an exterior shape was inevitably provided without aesthetic consideration, since the exterior structure was designed only in a simple form in order to maintain the strength of the product and resistance to external force.

### DISCLOSURE

### TECHNICAL PROBLEM

An object of the present invention is to provide a pet incubator that has been devised to solve the above-described problems, and the pet incubator may allow smooth oxygen supply to the animal, may quickly discharge excrement inside, and may be designed to allow only a part of the pet incubator to be replaced, thereby enabling easy installation and maintenance.

### TECHNICAL SOLUTION

In order to achieve the above object, the present invention may include a housing in which a space is formed, a case that is installed inside the housing, separates the inside of the housing into a first space and a second space, and has an air-circulating hole formed on one side, and an air-circulating module that guides air generated in the first space to the second space, measures the oxygen concentration of the air introduced into the second space, removes carbon dioxide, supplies oxygen, adjusts the temperature of the air guided inward, and selectively moves the air to the first space or to the outside.

The air-circulating module may include a separation part, the separation part comprising: a separation plate detachably installed on one side of the case and configured to separate the air-circulating hole into an inlet and an outlet; and a handle formed on one side of the separation plate.

In addition, the air-circulating module may include a sensor part that extracts a portion of the air guided into the second space, measures the oxygen concentration and carbon dioxide concentration in the air, and discharges the measured air into the first space.

In addition, the air-circulating module may further include a circulation part that is coupled to one side of the separation plate, guides the air flow from the first space to the second space, and blocks the outlet through which the air moves from the first space to the second space when the carbon dioxide concentration in the air is equal to or higher than a certain level, thereby guiding the air in the first space to be discharged to the outside.

In addition, the circulation part may include a circulation case coupled to one side of the separation plate, a filter member installed at the inlet to filter foreign substances in the air, a carbon dioxide separation part formed as a soda lime pocket and spaced apart from one side of the filter member to separate carbon dioxide from the air that has passed through the filter member, a heat exchanger spaced apart from the outer side surface of the carbon dioxide separation part to perform heat exchange with the air that has passed through the carbon dioxide separation part, and a blower fan that introduces the air into the circulation case through the inlet and guides the air to the outlet or to the outside.

In addition, the circulation part may further include a heater that is installed between the heat exchanger and the blower fan and heats the air.

In addition, the circulation part may further include an opening and closing door that is coupled adjacent to the outlet on the outer surface of the circulation case, and is rotated when the carbon dioxide concentration is equal to or higher than a predetermined level to close the outlet while opening the outer surface of the circulation case to discharge the air to the outside.

In addition, the oxygen supply part may include a switching valve that is coupled to an outer surface of the circulation part, and switches the oxygen supplied from an oxygen generator to the outside to drain the oxygen to the outside when the oxygen concentration introduced into the circulation part from the oxygen generator reaches a preset value.

In addition, the oxygen supply part may further include a silencer that is installed on an outer surface of the circulation part and reduces noise generated when supplying the oxygen from the oxygen tank or the oxygen generator to the air.

In addition, the air-circulating module may include a lamp part that is installed on one side of the separation plate in a direction facing the second space, emits infrared rays, and emits the infrared rays to the first space by being reflected by a reflection member.

In addition, the case may include a cleaning part, the cleaning part including a sloped plate having the other side inclined in a predetermined direction, and a cleaning nozzle installed on an inner side of the case and configured to move fluid inside the case in an outward direction of the case.

In addition, the cleaning part may be characterized in that a flow path is formed at an end of the sloped plate, the fluid moved to the end of the sloped plate is moved along the flow path, a water pump is installed at one end of the flow path, and when the fluid is moved into the flow path, water is discharged from the water pump to move the fluid to the other end of the flow path.

In addition, a strainer may be installed at the other end of the flow path to remove foreign substances contained in the fluid.

### EFFECT OF THE INVENTION

The pet incubator according to one embodiment of the present invention may have the effect of enabling an animal located inside the pet incubator to rest comfortably by smoothly circulating air inside and supplying oxygen into the interior, thereby maintaining the oxygen concentration in the air above a certain level.

In addition, the pet incubator according to one embodiment of the present invention may circulate air and, when the air moves back to the first space in which the animal located inside is positioned, may measure the carbon dioxide concentration in the air, and if carbon dioxide being equal to or higher than a certain level is detected, may rotate the opening and closing door to guide the circulated air to be discharged to the outside rather than to the first space, thereby preventing safety accidents such as breathing difficulties in the animal located inside due to a contaminated circulation part.

In addition, the pet incubator according to one embodiment of the present invention may separate a space in which an animal is located and a space for means for circulating air inside the housing, and may allow components of the space for circulating air and supplying oxygen to be detachably attached at once, thereby making it easy to repair and replace components inside the pet incubator.

In addition, the pet incubator according to one embodiment of the present invention may move the excrement in real time in one direction when the animal excretes inside the housing, may discharge the moved excrement to the outside, and may maintain cleanliness of the floor surface on which the animal is seated by spraying fluid.

### BRIEF DESCRIPTION OF THE DRAWINGS

FIG. 1 is a perspective view of a pet incubator according to one embodiment of the present invention.
FIG. 2 is a view showing the interior of a second space of a pet incubator according to one embodiment of the present invention.
FIG. 3 is a perspective view showing an air-circulating module and a case of a pet incubator according to one embodiment of the present invention.
FIG. 4 is a view showing an air-circulating module of a pet incubator according to one embodiment of the present invention.
FIG. 5 is a cross-sectional view showing a part of the air-circulating module according to one embodiment of the present invention.
FIG. 6 is a view showing a flow of air in the air-circulating module according to one embodiment of the present invention.
FIGS. 7 to 13 are views showing a switching valve according to one embodiment of the present invention.
FIGS. 14 and 15 are views showing a fluid flow in a first space according to one embodiment of the present invention.
FIG. 16 is a view showing a state in which fluid is moved in a cleaning part according to one embodiment of the present invention.

### BEST MODE

Hereinafter, Hereinafter, preferred embodiments according to the present invention will be described in detail with reference to the accompanying drawings.

Advantages and features of the present invention and methods for achieving them will become apparent from the embodiments described below in detail with reference to the accompanying drawings.

However, the present invention is not limited to the embodiments disclosed below but may be implemented in various different forms, and the present embodiments are merely provided to fully disclose the present invention and to fully convey the scope of the invention to those skilled in the art to which the present invention pertains, and the present invention is defined only by the scope of the claims.

In addition, in describing the present invention, detailed descriptions of related known technologies will be omitted when it is determined that such descriptions may obscure the gist of the present invention.

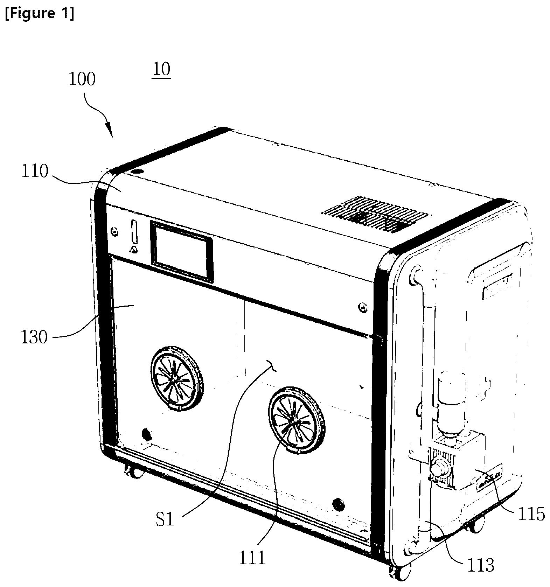

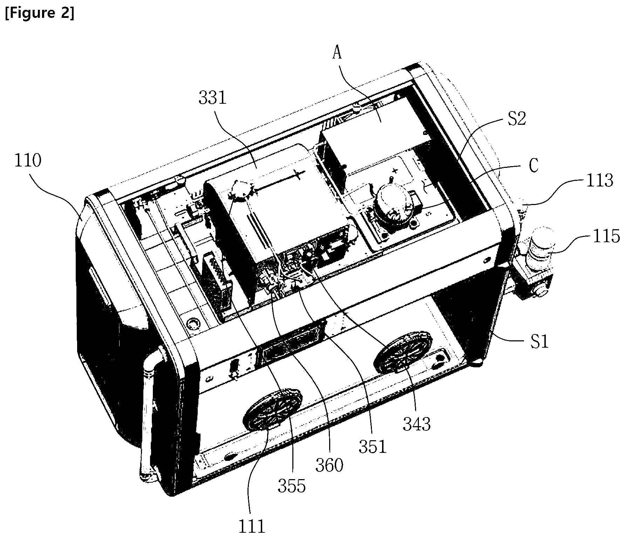

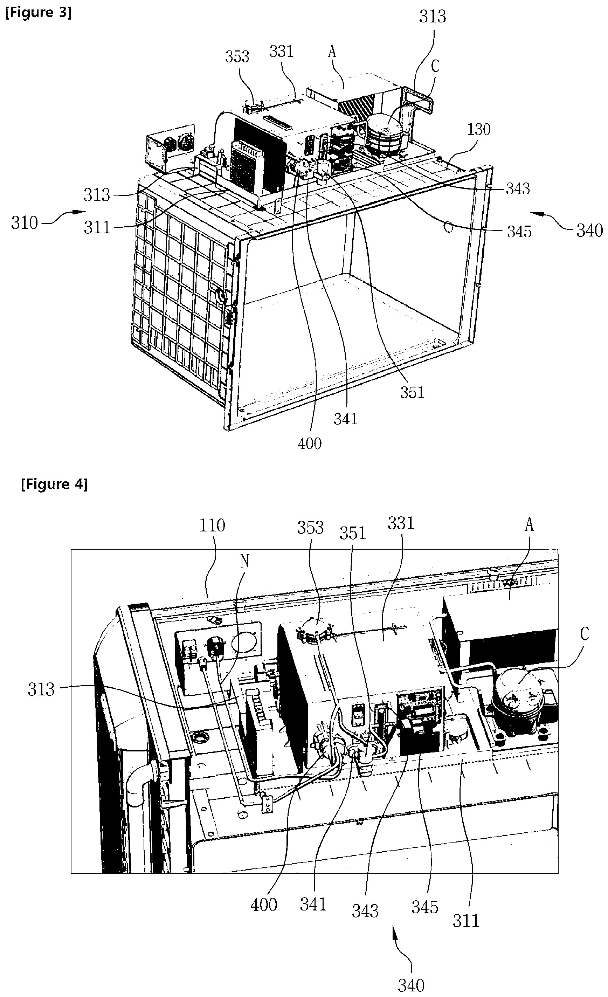

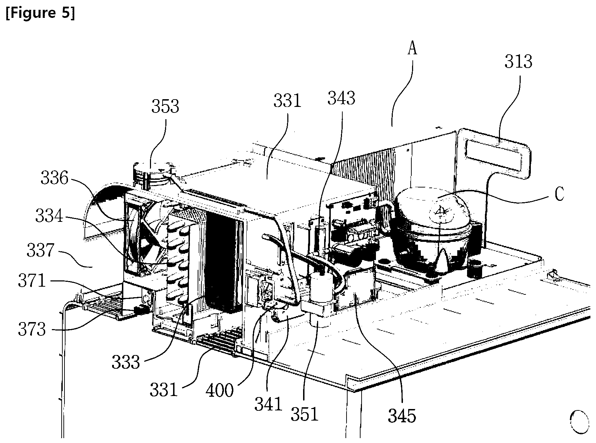

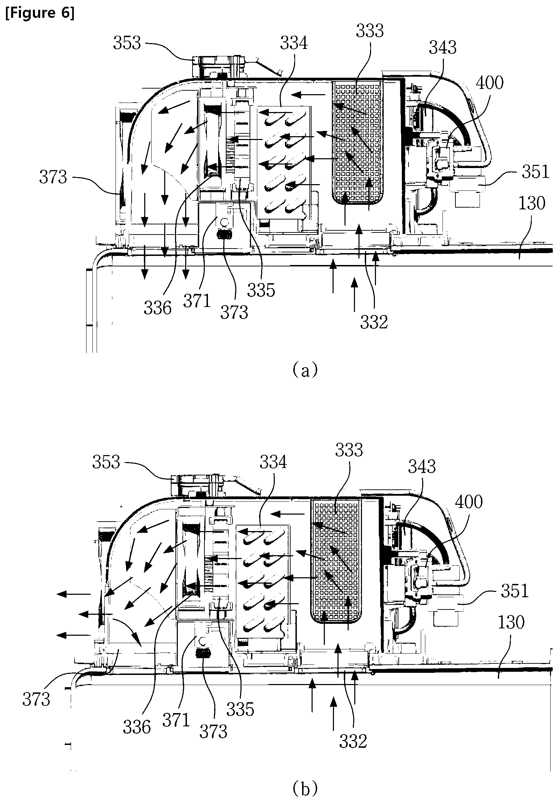

FIG. 1 is a perspective view of an pet incubator according to one embodiment of the present invention, FIG. 2 is a view showing the interior of a second space of the pet incubator according to one embodiment of the present invention, FIG. 3 is a perspective view showing an air-circulating module and a case of the pet incubator according to one embodiment of the present invention, FIG. 4 is a view showing the air-circulating module of the pet incubator according to one embodiment of the present invention, FIG. 5 is a cross-sectional view showing a part of the air-circulating module according to one embodiment of the present invention, and FIG. 6 is a view showing the flow of air in the air-circulating module according to one embodiment of the present invention.

With reference to FIG. 2, the lower side is defined as the downward direction, the upper side is defined as the upward direction, the direction from the case 130 toward the ventilation port 111 is defined as the front, the direction from the ventilation port 111 toward the case 130 is defined as the rear, the direction from the oxygen pump 351 toward the switching valve 400 is defined as the left side, and the direction from the switching valve 400 toward the oxygen pump 351 is defined as the right side.

Referring to FIGS. 1 to 6, a pet incubator 10 according to one embodiment of the present invention has a space formed therein so that an animal may enter and be positioned inside the space.

In this case, the pet incubator 10 according to one embodiment of the present invention may include a housing 100, an air-circulating module 300, a switching valve 400, and a cleaning part 500 so as to prevent continuous increase in the level of carbon dioxide or the like in the internal space as the animal generates carbon dioxide through breathing or the like in the internal space, and to clean the excrement in real time or periodically when the animal located in the internal space defecates, thereby maintaining cleanliness inside and preventing physical abnormalities of the animal.

The housing 100 may include an outer housing 110 and a case 130 so as to separate a space in which the animal is located and a space for a device that circulates air, thereby allowing efficient air circulation, and an air-circulating module 300, which may be a device for circulating air, may be detachably attached at once, so that replacement and maintenance of the air-circulating module 300 may be easily performed, and internal air circulation may be performed in different spaces.

The outer housing 110 may have a space formed therein. In this case, a plurality of ventilation ports 111 may be formed on an outer surface of the outer housing 110. The ventilation ports 111 may be installed on the outer surface located at the front of the outer housing 110. In this case, the ventilation ports 111 may include an open-close membrane, a plurality of air vents, or the like, and may open or block the flow of air between the outside and the inside of the outer housing 110.

In addition, the outer surface located at the front of the outer housing 110 may be configured to be openable and closable, so that the animal may be allowed to enter and exit the inside of the outer housing 110.

In addition, a mounting rod may be installed on a side surface of the outer housing 110. The mounting rod may be installed outside and may be coupled with an oxygen generator, an oxygen tank, or the like that supplies oxygen to the inside of the outer housing 110. In addition, a humidifier may be installed on a side surface of the outer housing 110, so that humidification may be performed into the outer housing 110.

In addition, the outer housing 110 may have a space formed therein so that an animal may be positioned inside the outer housing 110. In this case, a case 130 may be installed so that a first space S1 in which the animal is to be located and a second space S2, in which an air-circulating module 300 for filtering air of the first space S1, supplying oxygen into the first space S1, and cooling or heating the air of the first space S1 is installed, may be formed inside the outer housing 110.

The case 130 may be formed in a 'C'-shaped structure with a front portion opened. In addition, the front portion of the case 130 that is opened may be located on the outer surface located at the front of the outer housing 110 described above. This configuration may allow an animal to enter and exit the inside of the outer housing 110, and it may enable external air may be introduced through the ventilation port 111.

In this case, a space formed inside the case 130 in which the animal may be located may be the first space S1, and a space between an upper surface of the case 130 and an upper side of the outer housing 110 may be the second space S2.

That is, by the case 130, the inside of the outer housing 110 may be separated into a first space S1 in which the animal is located and a second space S2 in which an air-circulating module 300 for guiding the air flow is installed.

In addition, a bottom surface formed perpendicularly to the front portion of the case 130 may be formed to be partially inclined downward. Through this, a sloped plate 510, which will be described later, may be formed, so that fluid inside the case 130 may be guided forward.

In addition, an upper surface perpendicular to the front portion of the case 130 may have an air-circulating hole (not shown) formed in a central portion thereof, so that air inside the case 130 may be discharged upward or introduced from above through the air-circulating hole.

In this case, the air-circulating module 300 may be detachably installed on the upper surface of the case 130 in which the air-circulating hole is formed. Through this, air discharged through the air-circulating hole may be supplied with oxygen, have carbon dioxide removed, and be heated or cooled by the air-circulating module 300, and then may be introduced again into the inside of the case 130.

The air-circulating module 300 may include a separation part 310, a circulation part 330, an oxygen supply part 350, and a lamp part 370 so as to guide air of the first space S1 to the second space S2, circulate the air inside the case 130 to the inside of the air-circulating module 300, supply oxygen to the air guided to the inside of the air-circulating module 300, remove carbon dioxide, and heat or cool the air to introduce it again into the first space S1 inside the case 130.

The separation part 310 may be coupled to an upper surface of the case 130, may separate the air-circulating hole into an inlet and an outlet, and may allow the circulation part 330, the oxygen supply part 350, and the lamp part 370 of the air-circulating module 300 to be detachably attached at once, and may include a separation plate 311 and a handle 313 so that gripping is easy when detaching.

The separation plate 311 may be formed in a rectangular cross-section. In addition, the separation plate 311 may be formed in a plate shape. In this case, an inlet and an outlet may be formed in positions on the separation plate 311 corresponding to the position where the air-circulating hole is formed.

That is, a hole located at the center of the separation plate 311 may be formed in a separated manner so that an inlet and an outlet may be separately formed at positions corresponding to the air-circulating hole.

In this case, the inlet may be formed in front of the outlet, so that air in the first space S1 may move upward to the upper side of the separation plate 311 through the inlet located in front of the air-circulating hole, pass through the circulation part 330, the oxygen supply part 350, and the lamp part 370 located on the upper side of the separation plate 311, and be discharged through the outlet to be moved into the first space S1.

In addition, various components may be installed on an upper side of the separation plate 311. For example, a condenser and a compressor that are spaced apart from the circulation part 330 may be installed on the upper side of the separation plate 311, and may be separated together when the separation plate 311 is detached.

In this case, handles 313 may be formed to protrude upward on the left and right sides of the separation plate 311, thereby facilitating the separation of the upper side of the outer housing 110 and allowing easy gripping of the separation plate 311 may be easily gripped.

Thereby, the separation plate 311 may be easily detached from the case 130 by gripping the handle 313 in a state in which the upper side of the outer housing 110 is opened, so that the devices coupled to the separation plate 311 may be separated at once, thereby making it easy to replace or repair the components coupled to the upper side of the separation plate 311.

In addition, the portion of the separation plate 311 where the inlet and the outlet described above are located may be sealed by a circulation case 331 so that air flows only into the inside of the air-circulating module 300, while being separated from a condenser, a compressor, or the like installed on the upper side of the separation plate 311.

For example, the circulation case 331 may have a space formed therein and may be installed above the inlet and outlet to prevent air moving through the inlet and outlet from being discharged to the outside of the air-circulating module 300. In addition, an oxygen supply part 350, which will be described later, may be installed on an outer surface of the circulation case 331, and devices for operating components such as sensors installed inside the circulation case 331 may be coupled.

Referring to FIG. 6, air introduced into the inside of the circulation case 331 through the inlet may be moved to the case 130 through the outlet.

In this case, a filter member 332 may be coupled to the inlet. Through this, the air moved into the inside of the circulation case 331 may be primarily filtered.

In addition, carbon dioxide in the air may be removed by a carbon dioxide separation part 333 located above the filter member 332, from the air that has passed through the filter member 332.

The carbon dioxide separation part 333 may be formed in a rectangular cross-section. In addition, the carbon dioxide separation part 333 may be coupled to an inner upper end of the circulation case 331 by a magnet at an upper end thereof. In this case, the carbon dioxide separation part 333 may be installed as a pair. That is, the carbon dioxide separation parts 333 may be installed at the upper side of the circulation case 331 to face each other on the left and right sides.

In addition, the carbon dioxide separation part 333 may be installed above the inlet. Also, the carbon dioxide separation part 333 may be a soda lime pocket. Soda lime may remove carbon dioxide from the air that has passed through the filter member 332 by adsorbing the carbon dioxide generated by the breathing of the animal.

In this case, a heat exchanger 334 may be installed at a rear side of the carbon dioxide separation part 333, spaced apart from the carbon dioxide separation part 333.

The heat exchanger 334 may cool air that has flowed into the inside after carbon dioxide has been partially or completely removed through the carbon dioxide separating part 333. In this way, cool air may be provided to the animal. In addition, a heater 335 spaced apart from the heat exchanger 334 may be installed at a rear side of the heat exchanger 334. In this case, when an increase in air temperature is needed, the heater 335 may heat the air, and the heated air may be moved to a blower fan 336 located at the rear.

A blower fan 336 may be installed. In addition, the blower fan 336 may rotate in a predetermined direction. This may allow for the formation of an air flow in which air is introduced through the inlet and discharged through the outlet. In this case, a plurality of blower fans 336 may be installed on left and right sides, and the number of blower fans 336 may be determined and installed as needed according to the required air flow strength. Depending on the size of the pet incubator 10, the number of blower fans 336 may be determined. In addition, an opening and closing door 337 coupled to the circulation case 331 may be installed at a rear side of the blower fan 336.

The opening and closing door 337 may be a part of the circulation case 331, and when the opening and closing door 337 is opened, the circulation case 331 may be opened so that the air introduced into the inside of the circulation case 331 may move to the opening and closing door 337 and be discharged to the outside of the circulation case 331.

For example, as shown in FIG. 6, when air introduced through the inlet is primarily filtered and carbon dioxide is removed, and when the air is discharged through the outlet, the carbon dioxide level and the oxygen concentration are measured, and if the oxygen concentration, which may be a required value set by an administrator, is not satisfied, or if the carbon dioxide is measured to be equal to or higher than a value set by the administrator, it may be determined that contamination of devices such as the filter member 332, the carbon dioxide separation part 333, and the oxygen supply part 350 has increased or an abnormality such as a malfunction has occurred, and the opening and closing door 337 may be opened.

In this case, when the opening and closing door 337 is opened, the opening and closing door 337 may close the outlet and open a part of the circulation case 331, so that the air to be discharged may be prevented from being introduced into the first space S1 inside the case 130 and may be discharged to the outside.

Through this, when the oxygen concentration or the carbon dioxide concentration inside the circulation case 331 increases, the opening and closing door 337 may be opened by being detected through a sensor or the like coupled to the outer surface of the circulation case 331.

A plurality of sensor parts 340 and oxygen supply parts 350 may be installed on an outer surface of the circulation case 331 so as to supply oxygen into the circulation case 331, measure the oxygen concentration, the carbon dioxide concentration, and the internal temperature, reduce noise during oxygen supply, and allow oxygen supply or blocking into the inside of the circulation case 331.

The sensor part 340 may be installed on a front surface of the circulation case 331. In this case, the sensor part 340 may include a temperature and humidity sensor 341, an oxygen measuring part 343, and a carbon dioxide measuring sensor 345, which can measure the carbon dioxide concentration, oxygen concentration, and temperature inside the circulation case 331.

In addition, an oxygen supply part 350 may be installed on a front surface of the circulation case 331, and may include an oxygen pump 351 and a silencer 353 so as to supply oxygen into the circulation case 331 according to an oxygen concentration or a carbon dioxide concentration measured by the sensor part 340, and to add oxygen to the air discharged to the first space S1.

The oxygen pump 351 may be installed at a front side of the circulation case 331. In addition, the oxygen pump 351 may receive oxygen supplied from an oxygen tank or an oxygen generator connected to a switching valve 400 and may provide power for supplying oxygen into the circulation case 331.

A silencer 353 may be installed on an upper surface of the circulation case 331 and may reduce noise generated when oxygen is supplied into the circulation case 331 or into the outer housing 110. This may allow an animal located inside the case 130 to stay comfortably within the case 130. In this case, supply and blocking of oxygen may be controlled through a switching valve 400, which will be described later.

A lamp part 370 may be installed inside the circulation case 331 and may be installed below the blower fan 336 and the heater 335. In addition, the lamp part 370 may be sealed and installed below the blower fan 336 and the heater 335 by a separate case being installed. In this case, a lower portion of the lamp part 370 may be formed to be open or made of a transparent material, so that light of the lamp part 370 may be emitted into the inside of the case 130, which is the first space S1.

In this case, the lamp part 370 may include an infrared lamp 371 for treatment of the animal in the first space S1 and an indoor lamp 373 for securing visibility of the first space S1.

The infrared lamp 371 may be formed in a cylindrical shape. In addition, the infrared lamp 371 may be formed to extend in a direction from the left side toward the right side. In addition, the infrared lamp 371 may emit infrared rays upward and may emit infrared rays downward through a reflector located above the infrared lamp 371. Through this, it is possible to prevent infrared rays from being directly emitted to the animal and allow indirect emission, thereby preventing the animal from being exposed to excessive infrared rays due to the intensity of the infrared rays.

In addition, an indoor lamp 373 that emits light downward may be installed below the infrared lamp 371 so that visibility inside the first space S1 may be secured.

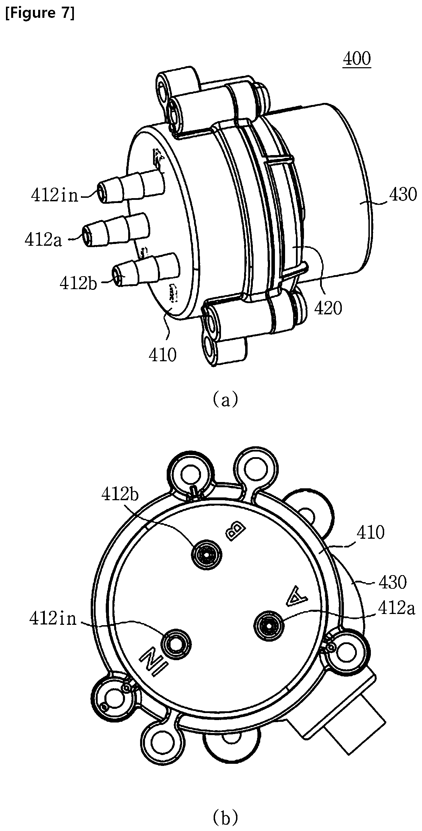

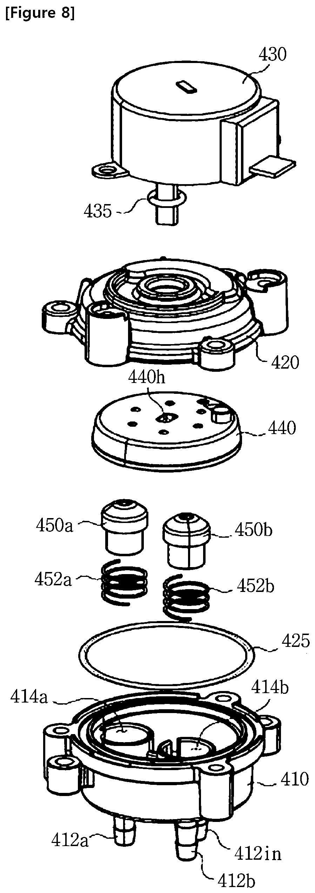

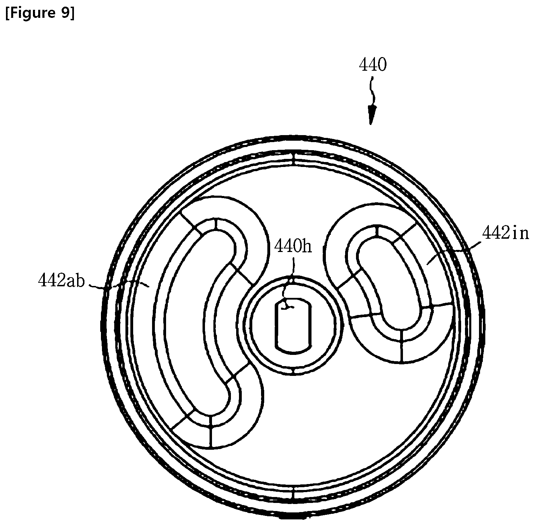

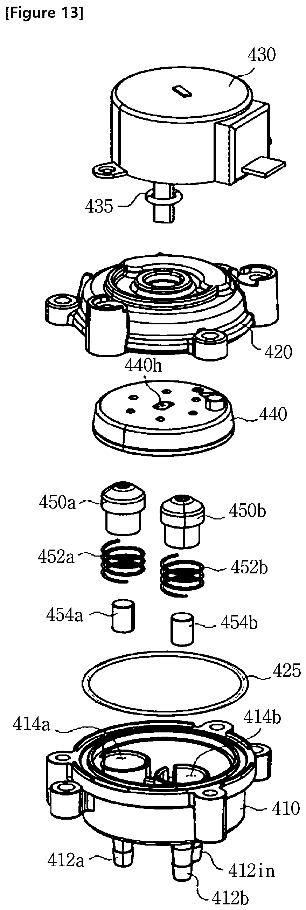

FIGS. 7 to 12 are views showing a switching valve according to one embodiment of the present invention, and FIG. 13 is a view showing a switching valve according to another embodiment of the present invention.

Referring to FIGS. 7 to 12, the switching valve 400 may allow oxygen supplied from the oxygen generator to be drained to the outside without being blocked when the oxygen generator continuously supplies oxygen and the oxygen concentration inside the circulation case 331 or the outer housing 110 reaches a set value, so that it is possible to prevent overload of the oxygen generator and to continuously supply oxygen into the circulation case 331 or the outer housing 110 while preventing errors, damage, or failure of the oxygen generator.

In addition, the switching valve 400 may be installed on a front surface of the circulation case 331 spaced apart from the oxygen pump 351. In addition, the switching valve 400 may be connected to an oxygen tank or an oxygen generator and may supply oxygen into the circulation case 331. For example, when the oxygen concentration is lowered as detected by the sensor part 340, the switching valve 400 may receive oxygen from the oxygen tank or the oxygen generator and may supply the oxygen into the circulation case 331.

In addition, when the switching valve 400 is connected to the oxygen tank or the oxygen generator, if the oxygen concentration supplied into the circulation case 331 satisfies a value set by an administrator, the switching valve 400 may block oxygen supplied from the oxygen tank or the oxygen generator.

For example, when an administrator sets the oxygen concentration to 40%, the oxygen tank may operate to open the switching valve 400, so that oxygen is supplied into the circulation case 331 or the second space S2 until the oxygen concentration reaches 40%, and when the concentration reaches 40%, the switching valve 400 may operate to close, thereby stopping the supply of oxygen.

In addition, when the switching valve 400 is used with an oxygen generator, since the oxygen generator cannot recognize whether 40% is reached, oxygen continues to be supplied, and the switching valve 400 may prevent overload of the oxygen generator, thereby preventing malfunction or damage.

A flow path switching valve 400 may include a valve body 410, first and second cams 450a and 450b, a cam disc 440, a cover 420, and a motor 430.

The valve body 410 may have, at one side thereof, an inlet pipe 412in and first and second outlet pipes 412a and 412b. In addition, the valve body 410 may include an inlet hole 412inh corresponding to one end of the inlet pipe 412in, and first and second cam receiving grooves 414a and 414b corresponding to one ends of the first and second outlet pipes 412a and 412b, respectively.

Here, the inlet pipe 412in may be connected to an oxygen tank or an oxygen generator for supplying oxygen.

The first and second outlet pipes 412a and 412b may be connected to a chamber in which care for the animal is performed and an exterior of the chamber, respectively.

The first and second cams 450a and 450b may be received in the first and second cam receiving grooves 414a and 414b of the valve body 410, respectively, and may block discharge of a specific gas.

Here, the specific gas may be oxygen. The flow path switching valve 400 according to one embodiment of the present invention may include first and second cam springs 452a and 452b, which are respectively received in the first and second cam receiving grooves 414a and 414b of the valve body 410 and provide elastic force to the first and second cams 450a and 450b, respectively, with a part of each of the first and second cams 450a and 450b being received therein.

Accordingly, opening and closing operations by the first and second cams 450a and 450b for the first and second outlet pipes 412a and 412b, respectively, may be facilitated by the first and second cam springs 452a and 452b.

Referring to FIG. 13, the flow path switching valve 400 according to another embodiment of the present invention may include first and second cam rubbers 454a and 454b, which are respectively provided between the first and second cams 450a and 450b and the first and second outlet pipes 412a and 412b, to increase sealing force for each of the first and second outlet pipes 412a and 412b, while being received in the first and second cam receiving grooves 414a and 414b of the valve body 410.

Accordingly, sealing force for each of the first and second outlet pipes 412a and 412b may be increased by the first and second cam rubbers 454a and 454b.

The cam disc 440 may include first and second cam compression protrusions 442ab for compressing at least one of the first and second cams 450a and 450b to switch a flow path of a specific gas, and a first or second cam compression protrusion 442in for compressing one of the first or second cams 450a or 450b to block discharge of the specific gas.

The cover 420 may cover the cam disc 440 and may be coupled with the valve body 410. The flow path switching valve 400 according to one embodiment of the present invention may include a valve body O-ring 425 provided between the valve body 410 and the cover 420 for sealing between them.

The motor 430 may be provided on the cover 420 and may rotate the cam disc 440 to switch the flow path of the specific gas.

A shaft of the motor 430 may be inserted into a motor shaft coupling hole 440h of the cam disc 440. Accordingly, as the cam disc 440 rotates by the driving of the motor 430, the first and second cam compression protrusions 442ab of the cam disc 440 may compress at least one of the first and second cams 450a and 450b to switch the flow path of the specific gas, and the first or second cam compression protrusion 442in may compress one of the first or second cams 450a or 450b to block the discharge of the specific gas.

The motor 430 may switch a flow path of a specific gas to discharge the specific gas to the outside when the concentration of the specific gas at a place where the specific gas is supplied is higher than a set value, and may switch the flow path of the specific gas to supply the specific gas when the concentration of the specific gas is lower than the set value. In addition, the motor 430 may be a geared electric motor.

The flow path switching valve 400 according to one embodiment of the present invention may include a motor O-ring 435 fitted onto a shaft of the motor 430 and provided between the cam disc 440 and the cover 420 to seal between them.

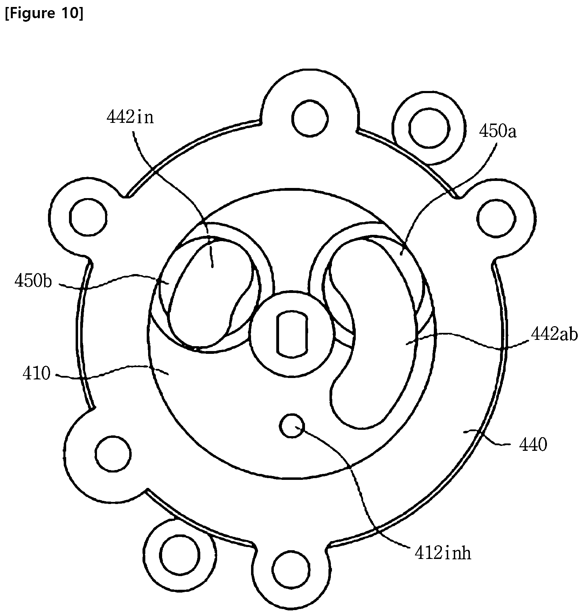

Referring again to FIGS. 10 to 12, the flow path switching valve (400 in FIG. 7) may be positioned between an oxygen tank or an oxygen generator that supplies oxygen and a chamber for animal care. eksf

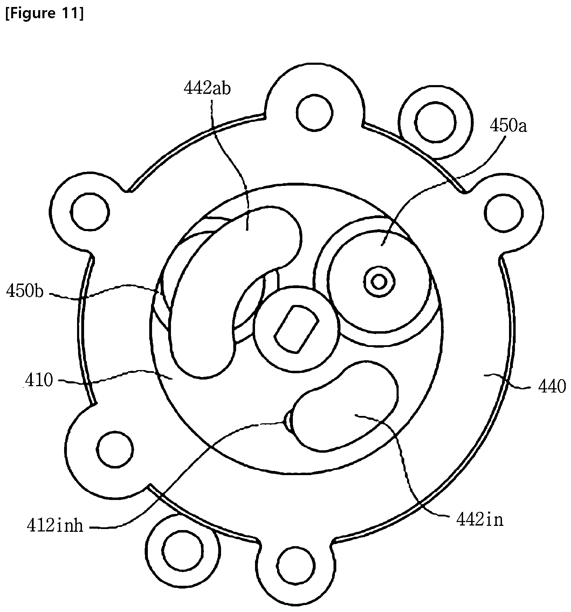

When the flow path switching valve according to one embodiment of the present invention is provided between the oxygen tank and the chamber for animal care, as shown in FIG. 11, when oxygen is supplied from the oxygen tank, the first and second cam compression protrusions 442ab of the cam disc 440 may compress only the second cam 450b to supply oxygen to the chamber.

In addition, as shown in FIG. 10, when oxygen is not supplied from the oxygen tank, the first and second cam compression protrusions 442ab of the cam disc 440 may compress the first cam 450a, and the first or second cam compression protrusion 442in may compress the second cam 450b to block discharge of oxygen.

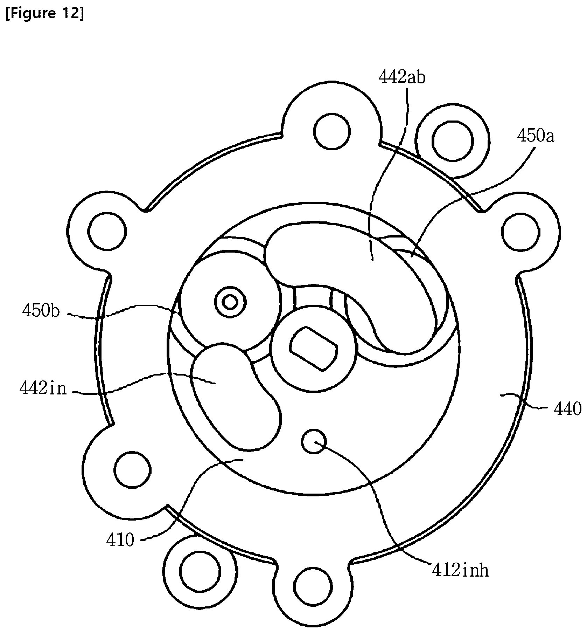

In addition, as shown in FIG. 12, when oxygen is supplied from the oxygen tank and the oxygen concentration in the chamber is higher than a set value, the first and second cam compression protrusions 442ab may compress only the first cam 450a to switch the oxygen flow path and discharge oxygen to the outside.

When the flow path switching valve according to one embodiment of the present invention is provided between the oxygen generator and the chamber for animal care, as shown in FIG. 11, when oxygen is supplied from the oxygen generator, the first and second cam compression protrusions 442ab of the cam disc 440 may compress only the second cam 450b to supply oxygen to the chamber.

In addition, as shown in FIG. 12, when oxygen is not supplied from the oxygen generator, the first and second cam compression protrusions 442ab may compress only the first cam 450a to switch the oxygen flow path and discharge oxygen to the outside.

A flow switching valve according to an embodiment of the present invention may comprise: a valve body having, at one side thereof, an inlet pipe and first and second outlet pipes, wherein the valve body includes an inlet hole corresponding to one end of the inlet pipe, and first and second cam receiving grooves respectively corresponding to one end of the first and second outlet pipes; first and second cams respectively received in the first and second cam receiving grooves and configured to block discharge of a specific gas; a cam disc including first and second cam-compressing protrusions configured to compress at least one of the first and second cams to switch the flow path of the specific gas, and a first or second cam-compressing protrusion configured to compress either the first or the second cam to block the discharge of the specific gas; and a motor configured to rotate the cam disc to switch the flow path of the specific gas, thereby enabling the specific gas to be supplied from a supply source to a place requiring a certain concentration of the specific gas, discharged to the outside, or supplied to a place requiring a certain concentration of the specific gas while blocking discharge to the outside. Accordingly, a flow path switching valve capable of maintaining a constant concentration of a specific gas at a location to which the specific gas is to be supplied may be provided.

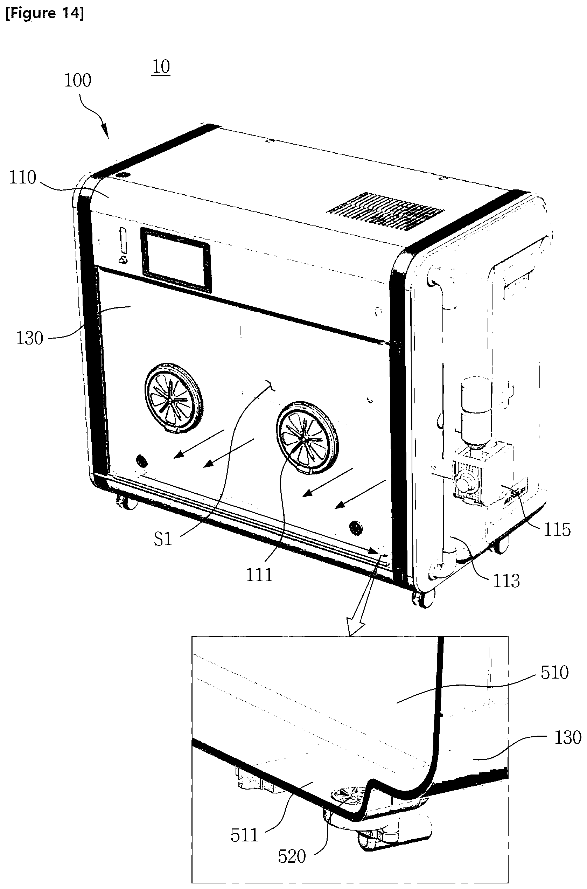

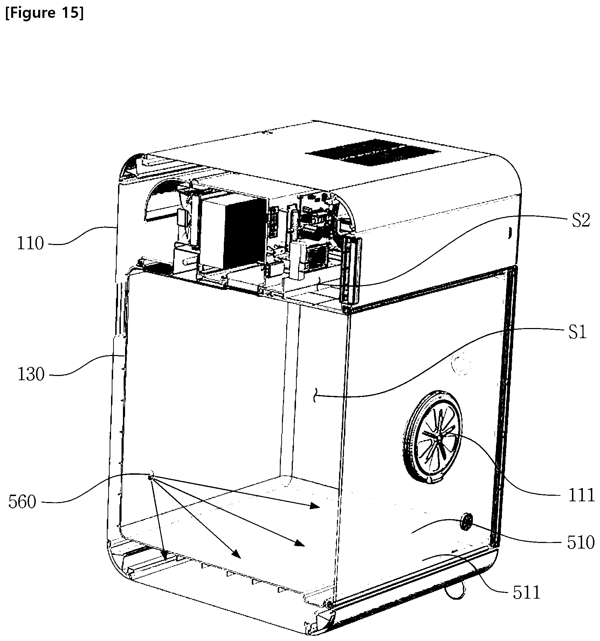

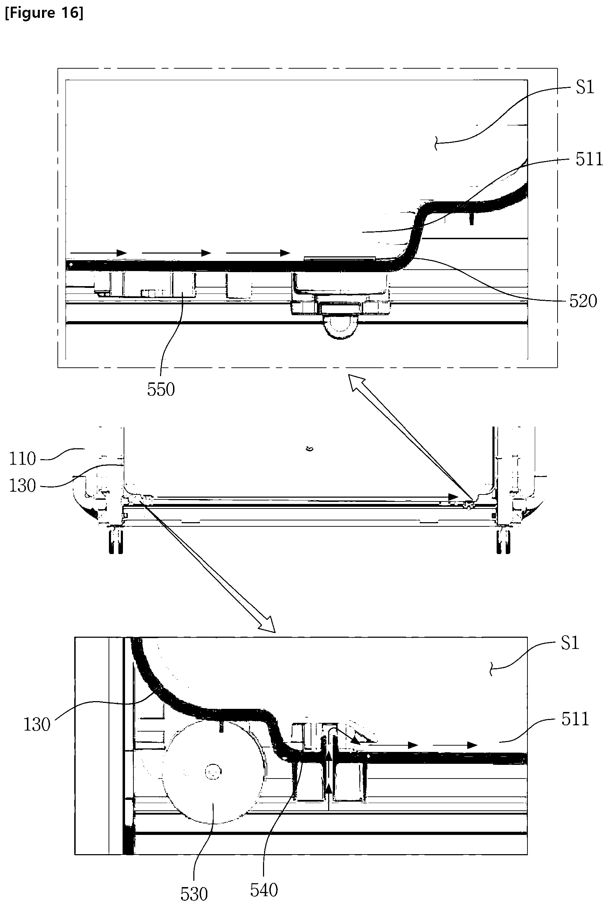

FIGS. 14 and 15 are views illustrating a fluid flow in a first space according to one embodiment of the present invention, and FIG. 16 is a view illustrating a state in which fluid is moved in a cleaning part according to one embodiment of the present invention.

Referring to FIGS. 14 to 16, a cleaning part 500, which includes a sloped plate 510, a strainer 520, a water pump 530, a water cover 540, a water sensor 550, and a cleaning nozzle 560 to allow real-time or periodic cleaning of animal excrement, may be installed at a lower portion of the case 130 according to one embodiment of the present invention.

A cleaning part 500 according to one embodiment of the present invention may be located at a lower portion of the case 130, and when an animal is located in the first space S1 and defecates, the excrement formed of a fluid or the like may be guided toward a front side of the case 130, so that the excrement generated inside the first space S1 may be continuously cleaned.

The sloped plate 510 may be formed at a lower portion of the case 130. In addition, the sloped plate 510 may be formed in a plate shape inclined forward.

In this case, the sloped plate 510 may be integrally formed with a bottom surface of the case 130. For example, when the bottom surface of the case 130 is formed to be inclined downward as it goes toward the front, the bottom surface of the case 130 itself may be the sloped plate 510.

Alternatively, the sloped plate 510 may be separately coupled to an inner surface of the lower portion of the case 130. In this case, the sloped plate 510 may be formed to be detachable from the bottom surface of the case 130, so that residual excrement remaining over time may be cleaned.

In addition, a flow path 511 may be formed at a front end portion of the sloped plate 510. In this case, the flow path 511 may be formed to be partially inclined from the left side toward the right side, so that excrement formed of a fluid or the like, which has moved into the flow path 511, may be moved toward the right side.

In addition, when the excrement excreted from the animal moves toward the flow path 511 on the sloped plate 510, a portion of the excrement, which may be a fluid, may be discharged downward from the sloped plate 510 through a strainer 520 formed at a right end portion of the flow path 511, and as the fluid such as urine flows downward, foreign substances that may block a drainage hole may be filtered, so that clogging of the drainage hole may be prevented when the fluid such as urine is discharged to the outside below the sloped plate 510.

At this time, in order to allow smooth movement of the excrement toward the flow path 511 and to detect the presence of the excrement, a water pump 530, a water cover 540, and a water sensor 550 may be installed below the flow path 511.

The water pump 530 may be installed on a left side of the flow path. In addition, the water pump 530 may move water upward from below the case 130, so that excrement or the like that has moved to the flow path 511 may be moved to the right side, and may provide water capable of moving fluid, such as cleaning water or excrement, which has moved to the flow path 511, from the flow path 511 at the front end portion of the sloped plate 510 to the strainer 520 located at the right end portion.

The strainer 520 may be formed in a circular cross-section having a plurality of holes, so that the fluid introduced into the strainer 520 may move to the lower side of the strainer 520 while excluding excrement having a certain size, thereby preventing clogging of a pipe located below the strainer 520.

In addition, the water cover 540 may be connected to the water pump 530 so as to prevent fluid, which may be water and may be moved by the water pump 530, from moving upward, and to allow the fluid to move along the flow path 511, and when the fluid, which may be water, is moved upward by the water pump 530, the water cover 540 may switch the direction of the water so that fluid, including excrement, located on the flow path 511, can be moved toward the strainer 520.

The water sensor 550 may be installed below the flow path 511. The water sensor 550 may be installed below the flow path 511, and when the fluid including the excrement located on the sloped plate 510 moves to the flow path 511 by the cleaning nozzle 560, the water sensor 550 may detect the presence of the fluid on the flow path 511 and activate the water pump 530.

That is, when excrement is present in the first space S1, the excrement including fluid may be moved toward the flow path 511 by the sloped plate 510 and the cleaning nozzle 560, and when the water sensor 550 detects the presence of fluid in the flow path 511, water may be sprayed again from the cleaning nozzle 560.

In addition, when fluid is located on the flow path 511 by the cleaning nozzle 560 and the sloped plate 510, the water pump 530 may be driven to move water toward the water cover 540, and the water cover 540 may move the water back to the flow path 511 located on the right side, so that the fluid including the excrement located on the flow path 511 may be moved toward the strainer 520 and discharged through a pipe connected to a lower side of the strainer 520.

Through this, the fluid including the excrement located in the first space S1 may be prevented from being left inside the first space S1 for a long time, and contamination caused by the long-term presence of excrement or the like in the first space S1 may be prevented.

The present invention has been described with reference to the embodiment(s) shown in the drawings, but this is merely exemplary, and those of ordinary skill in the art will understand that various modifications may be made thereto, and that all or a part of the above-described embodiment(s) may be selectively combined. Accordingly, the true technical scope of the present invention shall be defined by the spirit of the appended claims.

| | | | |
|---|---|---|---|
| 10: | pet incubator | 100: | housing |
| 110: | outer housing | 130: | case |
| 300: | air-circulating module | 310: | separation part |
| 311: | separation plate | 313: | handle |
| 330: | circulation part | 331: | circulation case |
| 332: | filter member | 333: | carbon dioxide separating part |
| 334: | heat exchanger | 335: | heater |
| 336: | blower fan | 337: | opening and closing door |
| 340: | sensor part | 341: | temperature and humidity sensor |
| 343: | oxygen measuring part | 345: | carbon dioxide measuring sensor |
| 350: | oxygen supply part | 351: | oxygen pump |
| 353: | silencer | 370: | lamp part |
| 371: | infrared lamp | 373: | indoor lamp |
| 400: | switching valve | | |
| 410: | valve body | 412a, 412b: | first and second outlet pipes |
| 412in: | inlet pipe | 412inh: | inlet hole |
| 414a, 414b: | first and second cam receiving grooves | 420: | cover |
| 425: | valve body O-ring | 430: | motor |
| 435: | motor O-ring | 440: | cam disc |
| 440h: | motor shaft coupling hole protrusions | 442ab: | first and second cam compression |
| 442in: | first or second cam compression protrusion second cams | 450a, 450b: | first and |
| 452a, 452b: | first and second ca, springs rubbers | 454a, 454b: | first and second cam |
| 500: | cleaning part | 510: | sloped plate |
| 511: | flow path | | |
| 520: | strainer | 530: | water pump |
| 540: | water cover | 550: | water sensor |
| 560: | cleaning nozzle | | |
| S1: | first space | S2: | second space |

## Claims

1. A pet incubator comprising:
a housing in which a space is formed;
a case installed within the housing, configured to separate the inside of the housing into a first space and a second space, and having an air-circulating hole formed on one side; and
an air-circulating module configured to guide air generated in the first space to the second space, measure an oxygen concentration of the air introduced into the second space, remove carbon dioxide, supply oxygen, adjust a temperature of the air guided inward, and selectively move the air to the first space or to the outside.

2. The pet incubator according to claim 1, wherein the air-circulating module comprises:
a separation plate detachably installed on one side of the case and configured to separate the air-circulating hole into an inlet and an outlet; and
a separation part including a handle formed on one side of the separation plate.

3. The pet incubator according to claim 1, wherein the air-circulating module comprises:
a sensor part configured to extract a portion of the air guided into the second space, measure an oxygen concentration and a carbon dioxide concentration of the air, and discharge the measured air to the first space.

4. The pet incubator according to claim 2, wherein the air-circulating module further comprises:
a circulation part coupled to one side of the separation plate, the circulation part being configured to:
guide an air flow from the first space to the second space, and,
when a carbon dioxide concentration of the air is equal to or higher than a predetermined level, block the outlet through which the air is moved from the first space to the second space, and guide the air in the first space to be discharged to the outside.

5. The pet incubator according to claim 4, wherein the circulation part comprises:
a circulation case coupled to one side of the separation plate;
a filter member installed at the inlet and configured to filter foreign substances from the air;
a carbon dioxide separating part formed as a soda lime pocket and spaced apart from one side of the filter member, the carbon dioxide separating part being configured to separate carbon dioxide from the air having passed through the filter member;
a heat exchanger spaced apart from an outer surface of the carbon dioxide separating part and configured to perform heat exchange with the air having passed through the carbon dioxide separating part; and
a blower fan configured to introduce the air into the circulation case through the inlet and guide the air to the outlet or to the outside.

6. The pet incubator according to claim 5, wherein the circulation part further comprises a heater installed between the heat exchanger and the blower fan and configured to heat the air.

7. The pet incubator according to claim 5, wherein the circulation part further comprises:
an opening and closing door coupled to an outer surface of the circulation case adjacent to the outlet, the opening and closing door being configured to rotate to close the outlet and open the outer surface of the circulation case to discharge the air to the outside when the carbon dioxide concentration is equal to or higher than a predetermined level.

8. The pet incubator according to claim 4, wherein the oxygen supply part comprises:
a switching valve coupled to an outer surface of the circulation part, the switching valve being configured to drain oxygen to the outside by switching the oxygen supplied from an oxygen generator to the outside when an oxygen concentration introduced into the circulation part from the oxygen generator reaches a preset value.

9. The pet incubator according to claim 8, wherein the oxygen supply part further comprises:
a silencer installed on an outer surface of the circulation part and configured to reduce noise generated when the oxygen is supplied to the air from the oxygen tank or the oxygen generator.

10. The pet incubator according to claim 2, wherein the air-circulating module comprises:
a lamp part installed on one side of the separation plate in a direction toward the second space, the lamp part being configured to emit infrared rays, which are reflected by a reflective member and emitted into the first space.

11. The pet incubator according to claim 1, wherein the case comprises a cleaning part, the cleaning part including a sloped plate having the other side inclined in a predetermined direction, and a cleaning nozzle installed on an inner side of the case and configured to move fluid inside the case in an outward direction of the case.

12. The pet incubator according to claim 11, wherein the cleaning part comprises:
a flow path formed at an end of the sloped plate and configured to move the fluid, which has moved to the end of the sloped plate, along the flow path, and
a water pump installed at one end of the flow path and configured to discharge water from the water pump when the fluid is moved along the flow path so as to move the fluid to the other end of the flow path.

13. The pet incubator according to claim 12, wherein a strainer is installed at the other end of the flow path and configured to remove foreign substances contained in the fluid.
